# EUROPEAN PATENT SPECIFICATION

(11) **EP 2 659 991 B1**
(45) Date of publication and mention of the grant of the patent: **25.11.2015**
(21) Application number: 13166404.7
(22) Date of filing: 03.05.2013
(51) Int. Cl.: B09B 3/00, B03B 9/06, C03C 1/00, C03B 37/01, C03B 37/00, C03B 37/10

(54) **Method for recovering waste from continuous fibre production installations and for directly recycling the resulting glass**
Verfahren zur Müllwiedergewinnung aus Endlosfaserproduktionsanlagen und zur direkten Wiederverwertung des resultierenden Glases
Procédé permettant de récupérer des déchets provenant d'installations de production de fibres continues et pour recycler directement le verre ainsi obtenu

(30) Priority: 04.05.2012 IT TO20120401
(43) Date of publication of application: 06.11.2013
(73) Proprietor: SASIL S.p.A., 13862 Brusnengo (Biella) (IT)
(72) Inventor: Ercole, Pietro, I-14100 Asti (IT); Ramon, Lodovico, I-13862 Brusnengo (Biella) (IT)
(74) Representative: Vanzini, Christian

(56) References cited:
- JP-A- 6 285 385
- JP-A- 2000 351 633
- JP-A- 2010 000 458
- US-A- 4 145 202

## Description

The present invention relates to a method for treating continuous fibreglass filament waste, comprising the steps of:
comminuting said waste to obtain comminuted fibre pieces of predetermined size;
continuously feeding a feedstock of comminuted fibre pieces to a heat treatment; and
within said heat treatment, heating said feedstock of comminuted fibre pieces to cause, in succession, the elimination of any moisture content, the evaporation of volatile components of an organic coating of the continuous fibre, and the combustion of residual components of the organic coating.

In the last 60 years, practically all enterprises engaged in continuous fibre filament production have sought to resolve the problem of recovering, re-using and/or recycling to the primary furnace the fibre and/or the intermediate materials obtained from the secondary processing of the fibre which for various reasons are rejected as waste material in the course of processing.

The main type of glass used in Europe for producing continuous fibre is E-glass, the composition of which is undergoing development to improve its physical characteristics and workability and also to limit the effect of the raw materials on the unit cost of production. The glass, which leaves the furnace continuously, is fed to a refiner which conditions it uniformly at a strictly defined temperature, from which it is sent to the bushings, each of which has hundreds of calibrated holes through which the fibres emerge. The bushings are continuously heated by electrical resistances to keep the viscosity of the glass constant at a value which enables a constant flow to be maintained for each hole. The diameter of the continuous fibre is obtained by controlling the drawing speed of the filaments within the range from 5 to 70 m/s, which is evidently chosen as a function of the diameter of the fibre to be obtained, within a range from 5 to 24 millimicrons. Downstream of the bushings, the fibres are first cooled with atomized water to harden them and fix their geometrical characteristics, after which they are carried on a roller conveyor on which the cooling is completed by means of systems of fins and continuous water spraying. Immediately thereafter, the fibres are coated with organic polymers which, on the one hand, have a binding function, and, on the other hand, provide protection against the abrasion that the fibres will undergo due to friction with one another in the subsequent steps of the process. Finally, it should be noted, in this context, that the compositions of the coatings vary according to the type of application for which the glass fibres are intended. The components present may be: film formers such as vinyl acetate, polyurethane or epoxy resins; agents promoting coupling to the glass, such as silanes; agents which modify the pH of the medium, such as acetic acid, hydrochloric acid and ammonium salts; and lubricants such as mineral oils and surfactants. The filaments are then assembled into bundles which are sent to the subsequent steps. At this point in the process, the organic binder content of the long fibres has already reached levels in the range from 0.5% to 1.5%. Clearly, therefore, depending on the point in the primary cycle at which the continuous fibre is rejected as waste, in its unprocessed form and/or as an intermediate product, the content of organic substances adhering to its surface can vary in terms of both the quantity and the type of substances, and the waste material cannot be directly recycled to the furnace, owing to the presence of the organic products. Furthermore, the aforesaid treatments are carried out in order to provide optimal adhesion of the resins which are subsequently used to produce composite materials, the use of which is increasing in a remarkable way. It should also be noted that the most important end user of bundles of continuous filament fibres is the composite materials industry, which produces articles for various applications which make use of the very high mechanical strength of the fibres. Depending on the technical requirements, each application requires different resins (thermoplastic and/or thermosetting) in very high proportions relative to the glass fibre present.

In conclusion, therefore, because of the increasingly urgent need to recover the glass present in the primary process waste in order to obtain glass which is free, or practically free, of organic substances for recycling to the primary furnace, and/or to obtain recovered fibres for producing articles of lower commercial value, and also because of recent legislation requiring the recovery and re-use of materials contained in products at the end of their lives, new processes have been investigated over the last 10 years for recovering long fibres contained in primary process waste and those which can be recovered from the dismantling of various types of articles made from composite materials, such as wind turbines for electricity generation. The need to investigate new processes for recovering long fibres included in primary process waste is becoming increasingly urgent in view of the fact that long fibre production worldwide has been growing at an average rate of 8% per annum for several years, while the percentage of production waste in the resulting product continues to be of the order of 15 - 20%, and also in view of the fact that the increase in energy production from renewable sources is giving rise to several hundred thousand tons of end-of-life composite material per year in Europe alone, which must be processed to recover the glass contained in it.

A method of the type defined in the introductory part of this text is proposed in US 4145202, which describes the processing of continuous fibre waste and other intermediate products resulting from long fibre production, with the aim of obtaining a material for recycling to the primary furnace and thus reducing production costs. The method uses a sequence of three controlled heat treatments for the purpose of drying the material, removing the volatile organic products by evaporation, and finally incinerating the residual organic substances. The third treatment must be carried out at a temperature below the softening point of the glass fibre.

In the aforementioned process, and in other known methods, it is preferable to operate below the softening point of the fibre, because, on the one hand, the combustion agent, for burning organic substances, must reach the whole surface of the fibre, and this is not possible if the underlying surface is protected by a layer of semi-melted glass, while, on the other hand, the cracking products of the organic polymers which are formed in the absence of combustion agent cannot be removed, for the same reason. When the heat treatment is carried out at a temperature below the softening point of the fibre, the interstices of the non-deformed fibre allow the combustion agent to contact the underlying material as well, and to complete the combustion of the organic substances. Furthermore, at this temperature the risk of losing some of the volatile boric oxide (B₂O₃), which is already decreased by the reduction of the content in the glass from the maximum of 10% used previously to the present level of 5%, is objectively eliminated for practical purposes.

However, operating at relatively low temperatures means that the more heat-resistant polymers cannot be eliminated.

One object of the present invention is therefore a method for treating continuous fibreglass filament waste which makes it possible to eliminate all the organic polymers which may be present in this waste.

The invention therefore proposes a method for treating continuous fibreglass filament waste of the type defined initially, in which:
said feedstock of comminuted fibre pieces is fed to the heat treatment as a web of material, the thickness of said web of material at the entry to the heat treatment being controlled so as to have a predetermined maximum value;
at least the combustion of residual components of the organic coating takes place in a tunnel furnace comprising a plurality of heat sources provided at least above and below said web of material; and
during the heat treatment, the feedstock of comminuted fibre pieces moves continuously forward, and is brought, in a progressively rising way, from a starting temperature to a final heating temperature greater than the softening point of fibreglass.

The method proposed by the present invention resolves the problem of ensuring that the combustion agent essential for the combustion of the organic polymers is present under the semi-melted layer, while also resolving the problem of the loss of B₂O₃. The layer of material fed in a uniform way and with the desired thickness on the surface of the conveyor belt running through the furnace is saturated with air in sufficient quantity to initiate the combustion of the organic substances present; at the same time, the combustion process is not impeded by the melting of the glass fibre, for reasons which are explained below. The method according to the invention therefore makes it possible to operate, for the purposes of the heat treatment cycle, above the softening point of the fibre (500°C), and then to pass the waste through higher temperatures (from 500°C to 900°C) at which the more heat-resistant polymers are destroyed by pyrolysis or incineration, so that, ultimately, all the organic polymers which may be present in the waste from the primary long fibre production process are treated.

Preferred embodiments of the invention are defined in the dependent claims, which are to be considered as an integral part of the present description.

Further characteristics and advantages of the method according to the invention will be made clearer by the following detailed description of an embodiment of the invention, given with reference to the attached drawings which are provided purely as non-limiting illustrations, in which:

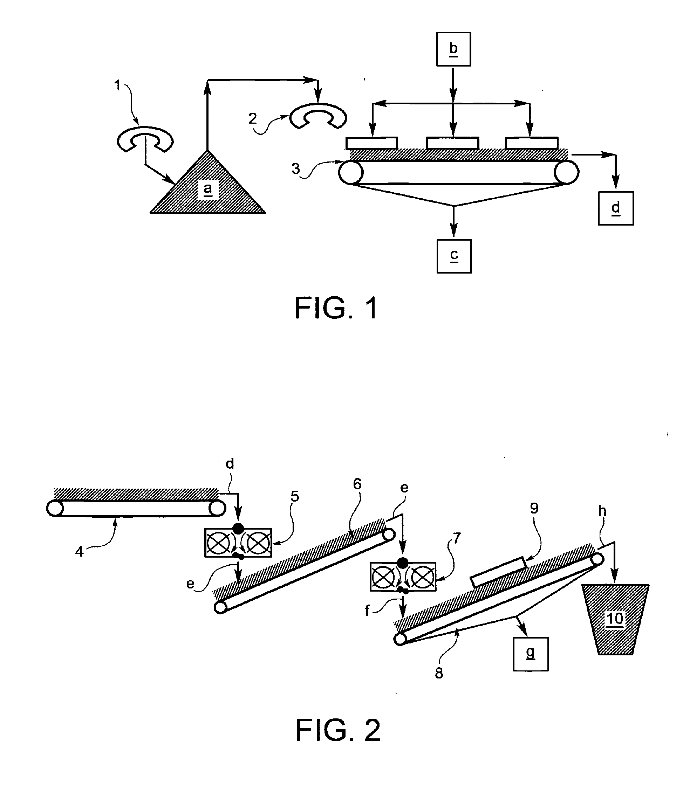

Figure 1 is a diagram of a first part of an installation for the application of the method according to the invention, for washing and for draining off the water and the organic substances emulsified with it.
Figure 2 is a diagram of a second part of an installation for the application of the method according to the invention, for preparation of the long fibres and intermediate products so as to reduce their length to a predetermined length and to eliminate any magnetic metals that may be present;

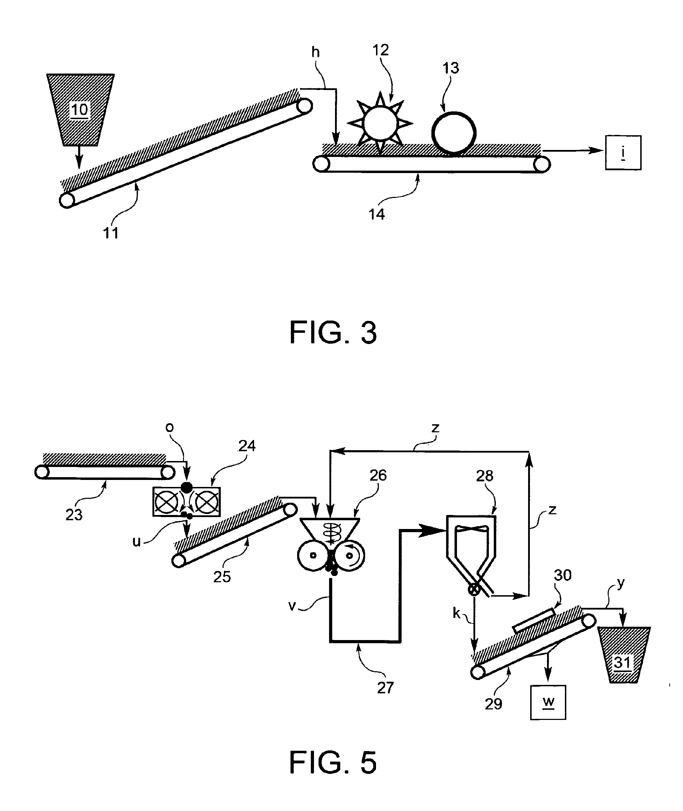

Figure 3 is a diagram of a third part of an installation for the application of the method according to the invention, for uniform distribution of the fibre which has been shortened and separated from magnetic metals on the conveyor belt made of heat-resisting steel, to form a mat of fibres having the desired uniform thickness;

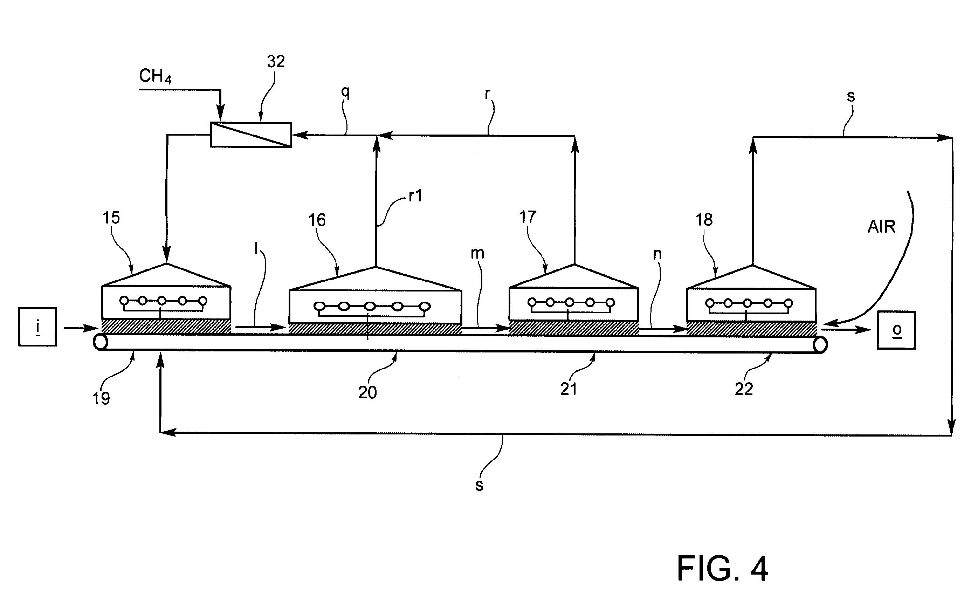

Figure 4 is a diagram of a fourth part of an installation for the application of the method according to the invention, for heat treatment of the material, including, in the initial part, an optional step of drying the material before its entry into the furnace for treatment in three successive steps; and
Figure 5 is a diagram of a fifth part of an installation for the application of the method according to the invention, crushing of the sintered glass leaving the thermal cycle and its subsequent grinding in a high-pressure mill to reduce it to a powder which is classified in a wind separator to give the finished product a very high degree of fineness.

The present invention proposes a method for recovering the various types of glass filaments rejected as waste in the course of production and recycling them to the primary continuous fibre production furnace. This continuous glass fibre filament waste may consist of pieces of continuous glass fibre filament and/or intermediate products containing continuous glass fibre, for example continuous glass fibre assembled in coils, textiles or cloths. These materials are contaminants, owing to the presence of various kinds of organic products, which differ widely according to the section of the process in which rejection occurred. The organic compounds which may be present include size, vinyl acetate, polyurethane, epoxy resins, organofunctional silanes, powdered polyester resins, lubricants, and others. The following may also be simultaneously present: magnetic metals and other metals, as well as non-meltable inorganic materials, mainly stone and refractory materials, etc.

According to the invention, a recovered product is obtained, free of any reducing organic substances, magnetic metals or other metals, and the size of the recovered glass, when free of organic substances, is reduced by grinding to a particle size (preferably less than 45 microns) which allows the refractory materials to go into solution during glass production. The product obtained by applying the principles of the invention can ultimately be recycled to the primary long fibre production furnace, in amounts which may constitute a very high percentage (20-40%) of the extracted glass, without any deterioration of the chemical and physical characteristics of the glass produced, thus eliminating the need to dispose of process waste, while achieving a considerable increase in production efficiency, in the region of 15%.

In a preferred embodiment of the invention, the process of exploiting, recovering and recycling waste includes the following treatments:
- washing with water, followed by draining of the water and the organic substances emulsified with it, in order to reduce the content of these substances in the next steps;
- reduction of the length of the continuous fibre to pieces of predetermined size, preferably in the range from 5 to 10 cm, followed by storage in a hopper;
- separation of magnetic metals and other metals, using high-efficiency continuous machines, to be carried out only if the initial material contains the aforesaid extraneous products. The shortened fibre is fed from the hopper by means of a belt feeder to the subsequent steps of the process;
- distribution of the material over the whole surface of a conveyor belt made of heat-resistant steel which runs through the furnace, and control of the thickness and uniformity of the material to achieve the desired values. The aforesaid parameters are intended to optimize heat penetration and, above all, uniformity of the temperature, which rises continuously during the heat treatment;
- heat treatment of the shortened fibre in the tunnel which is heated both from below and above with electrical resistances, during which the temperature rises continuously from 50°C to 850 - 900°C, and is subsequently reduced continuously, in the terminal step of the treatment, from 900 - 850°C to 100°C, and the total time of travel inside the tunnel can be adjusted as a function of the residual content of organic substances in the finished product.

During trials which were conducted, it was surprisingly discovered that if the heat treatment was carried out so as to raise the material above the softening point of the fibre, the low coefficient of heat transfer prevented the material itself from reaching the softening point, thus enabling it to retain its permeability to the incoming combustion agent and to the outgoing products of combustion and thermal degradation, and allowing the process of breaking down the organic substances by combustion and/or incineration to be largely completed.

The material carried on the conveyor belt with a continuous adjustable and controllable motion is heated gradually from 25°C to 900°C, and is subsequently cooled, in the terminal step of the treatment, from 900°C to 100°C.

Along its path, the material is dried in the interval from 100°C to 140°C, the volatile organic substances are removed by evaporation between 140°C and 200°C, the more thermolabile polymers are removed by combustion between 140°C and 400°C, and the more thermally stable polymers are removed by incineration between 400°C and 600°C.

The upper resistances then heat the material to a temperature of 850 - 900°C, causing its surface to melt and thus reducing the evaporation loss of boric oxide (B₂O₃), which is currently present in E-glass in smaller amounts than those found in the past (< 5% instead of 10%).

The essence of the invention lies in the fact that this mode of operation makes it possible to maintain, on the one hand, the penetration of the combustion agent through the fibre structure, and, on the other hand, the outflow of the products of evaporation, combustion, incineration and pyrolysis.

A useful option in the process is that of supporting the first step of the heat treatment (in which the material is dried at a temperature between 100°C and 140°C) by using the potential heat contained in the fumes produced in the steps of combustion and incineration of the organic substances, and completing the combustion of these substances by means of a burner which is additionally supplied with natural gas in the quantity required to maintain the temperature at the desired level during drying. The fumes produced are used to heat air in a heat exchanger, the air being used to transfer heat to the material in a drying section located immediately upstream of the furnace itself.

The product discharged downstream of the continuous heat treatment is stored in a hopper from which it is collected by a conveyor belt feeder supplying a high-pressure mill.

The ground product, which still contains non-melting substances, although the particle size (< 45 microns) is such that these substances can be completely dissolved during the production of the glass, is screened in a wind separator which yields the fraction with a particle size of less than 45 microns which is collected and fed in a measured way into the mixture to be supplied to the primary furnace, while the fraction having a larger particle size is recycled to the mill.

Fig. 1 shows a diagram of the draining of the waste material to be recovered and recycled. The material, indicated by the letter a, is stored in a pile from which it is loaded by fork lifts 1 and 2 into a draining apparatus 3 which is set up to receive washing water, b, which can emulsify some of the low-molecular organic substances that may be present, thus reducing the content of organic substances present in the course of the subsequent heat treatment. Downstream of the washing process, the draining is completed by suction provided underneath the draining surface, producing a liquid effluent, c. The washed material, indicated by the letter d, is then supplied to the next step.

Fig. 2 shows a diagram of the physical preparation of the material, d, which is supplied by means of a conveyor belt feeder 4 to a first cutter 5 which reduces its average length to 100 cm (the shortened material is indicated by the letter e) and discharges it on to a subsequent conveyor belt 6 which, in turn, supplies a second cutter 7 which further reduces the fibre length to 5 - 10 cm (the material which has been further shortened is indicated by the letter f) and discharges it on to a third conveyor belt 8 which carries it under a magnetic separator 9. The shortened material (5-10 cm in length) is separated from the magnetic metals (indicated by the letter h) and discharged into a hopper 10, while the waste, g, from the magnetic separator is collected separately.

Fig. 3 shows a diagram of the system for uniformly distributing the recovered material, after it has been shortened and freed from the magnetic materials, on the conveyor belt of heat-resistant steel controlled by the furnace, and for controlling the thickness of the material during the heat treatment. The material, h, is deposited by means of a conveyor belt feeder 11 on to the conveyor belt of heat-resistant steel 14, and is placed on the surface of the latter by means of a disperser 12 followed by a cylinder 13 which extends across the whole width and is fixed at a precise and adjustable distance from the belt 14; this cylinder determines and controls the thickness of the mat of fibre as specified. This thickness is preferably in the range from 2 to 15 cm, or, particularly preferably, in the range from 5 to 10 cm. The mat or web of fibre produced in this way, indicated by the letter i, then undergoes the steps of the thermal cycle shown schematically in Fig. 4.

This figure shows the four steps of the thermal cycle, in which the recovered fibre is freed from organic substances, sintered and cooled; this heat treatment takes place continuously, without any holding time at the intermediate temperatures. The mat of shortened fibre, freed from any magnetic metals that were present, passes at ambient temperature into a preliminary heating stage 19, equipped with a hood 15, and leaves this stage at a temperature of 140°C to enter the furnace itself. In the preliminary stage 19, located upstream of the furnace itself (in an alternative embodiment which is not shown, this preliminary heating stage also takes place in the tunnel furnace), the material, i, is heated, and the volatile organic compounds are evaporated by the heat supplied by air that has been preheated in a heat exchanger 32 by heat produced, respectively, by the fumes, q, resulting from the combustion of the organic substances, and by the natural gas (CH₄) which is required in order to reach and maintain the temperature of 140°C chosen for drying. The flow q is the sum of the flows r1 and r obtained, respectively, from the successive steps 20 and 21 of the thermal cycle. At the same time, the hot air, t, obtained in a stage 22 equipped with a hood 18 for cooling the sintered glass, is sent to the preliminary stage 19, where it gives up some of the heat which it contains. The dry material, 1, then passes into a first stage 20 of the furnace, equipped with a hood 16, in which the more thermolabile polymers are pyrolysed at a temperature of between 140°C and 500°C, and the resulting fumes r1 are discharged and combine with the fumes r from the hood 17 of the next stage 21 to form the aforesaid flow q. The material, now indicated by the letter m, then passes through the second stage 21 of the furnace, in which the more heat-resistant polymers are pyrolysed at a temperature between 500°C and 900°C, thus completing the removal of the organic substances that were initially present. In the first part of the second stage 21 of the furnace in which the pyrolysis of the remaining macromolecules is completed, use is made of the surprising effect caused by the low coefficient of heat transfer of the glass, which retards the surface softening of the fibre, enabling the pyrolysis products to be discharged through the interstices between the filaments, while the surface softening takes place in the second part of this stage, followed by the sintering of the glass.

The material n, from which the organic substances have also been removed in this way, passes into the cooling stage 22, equipped with a hood 18, in which it is cooled with blown air to bring it to a temperature below 100°C, and is crushed and discharged in pieces with a size of a few centimetres, with properties of fragility which make it particularly suitable for grinding (o).

Fig. 5 shows the steps of the final part of the process. The sintered fibre, indicated by the letter o, is stored and collected by means of a conveyor belt feeder 23 which supplies a crusher 24 which reduces it to pieces with an average size of 1 cm (u). A belt feeder 25 collects the crushed material and supplies it to a high-pressure mill 26 which reduces it to a powder (v). The powder is supplied by means of a pneumatic conveyor 27 to a wind separator 28 which divides it into two fractions. The finer fraction (< 45 microns), indicated by the letter k, is carried by means of a conveyor belt 29 under a high-field electromagnet 30 in order to eliminate any very fine fragments of magnetic metal that may still be present, these fragments being discharged (w), while the finished product, y, is stored in a hopper (31). The fraction with a particle size of more than 45 microns (z) is recycled to the mill. The recovered glass, 100% of which has a particle size of less than 45 microns (y), is then collected from the hopper 31 to be fed and mixed with the other raw materials and then recycled to the primary furnace for the production of new long fibres, in concentrations which may be very high. After melting tests conducted at 1350°C for three hours, no bodies of unmelted material were found by microscopic examination.

### Examples

The data shown below are intended to quantify the specific consumption of the various raw materials, and can be used to determine the quantities of organic polymers that may be present in the waste products and, ultimately, to gain an understanding of the extent of the problem of recovering an E-glass which is free of organic substances and which can therefore be recycled to the primary furnace for the production of new fibre. The ignition loss, during glass production, is about 16%, while the overall wastage varies from a minimum of 6% to a maximum of 25% relative to primary furnace production (the weighted mean being about 15% relative to the glass extracted from the furnace). The content of organic substances in the finished product, and therefore in the waste also, varies from a minimum of 0.4% to a maximum of 4% by weight, while the moisture content varies from 1% to 6%. The energy consumption for melting the mixture varies, according to the type and size of the furnace, from 7 to 18 GJ/ton, while the total energy consumption is between 10 and 25 GJ/ton of long fibre produced.

### Example 1

A specimen of 100 kg of waste material from the primary continuous fibre production cycle, containing 90% continuous fibre and 10% intermediate product, characterized by a content of organic substances determined as the COD (mg of O₂/1 g of substance) and expressed as a percentage of elementary carbon of 1.2%, a moisture content of 3%, and the presence of magnetic metals and opaque non-melting materials, was initially subjected to draining and washing with water which removed about half of the water initially present (1.5 kg) and an unquantifiable proportion of organic products emulsified with the water. The drained material was stored in a hopper from which it was collected by means of a conveyor belt feeder and supplied to a first continuous cutter which reduced the length of the long fibre to an average of about 100 cm, and then to a second cutter which further reduced the length to the range from 5-10 cm. The resulting material was then passed continuously through a magnetic field which extracted all the magnetic metals present (about 0.6 kg). The material prepared in this way was then stored in a hopper from which it was collected by a conveyor belt feeder which supplied it to a spreading machine which placed it uniformly over the whole surface of the conveyor belt of heat-resistant steel with a uniform thickness of 5 - 7 cm on average. The conveyor belt therefore travelled with the material throughout the length of the furnace (1380 cm) at a speed of 35 cm/minute for a total period of about 40 minutes in which the temperature rose continuously from 20°C to 900°C without any stoppage in the transit. 85% of the length of the furnace (about 34 minutes of the total time) was used for loading the material (about 3 minutes) after which the remainder of this section (about 31 minutes) was used for the heat treatment, in which, in the interval from 20°C - 140°C, the material was dried and the volatile part of the remaining organic substances was eliminated, and, in the interval from 140°C - 500°C, the combustion of some of the polymers and the virtually quantitative incineration of the more thermolabile polymers took place. The temperature was then raised rapidly, and again continuously, from 500°C to 850 - 900°C. In this step, the incineration of the more heat-resistant organic substances was completed or practically completed, while the material was converted to a semi-melted product as a result of the lowering of its viscosity. In the remaining 15% of the length of the furnace (about 6 minutes of transit time), after the completion of the thermal cycle, the material was cooled continuously from 900°C to 100°C without stoppages at the intermediate temperatures, to congeal the surface. The test confirmed the effect which was surprisingly observed previously, by which, due to the low coefficient of heat transfer, the glass retained its fibrous appearance even when the ambient temperature had risen substantially above the softening point of the fibre, the result being that the discharge of the incineration products was promoted. The product leaving the furnace was easily removed from the conveyor belt of heat-resistant steel, which returned to the initial position and was reloaded with shortened fibre by means of the spreading machine described above. The output product, with irregular dimensions of a few centimetres, was stored in a hopper, from which it was collected and supplied to a high-pressure mill which reduced its dimensions to less than 45 microns. The product leaving the mill was sent to a wind separator which separated the fraction above 45 microns, which was recycled to the mill. At the end of the process, 93.6 kg of recovered glass was obtained, with a residual content of organic substances, expressed as carbon, of 0.025%. The glass with a particle size of less than 45 microns, which had the appearance of a completely dry white powder, was treated with a high-field electromagnet which did not reveal any magnetic metal fragments. After the glass was melted in a crucible at 1350°C for three hours, no traces of unmelted material were found.

### Example 2

A specimen of 100 kg of waste material from the primary continuous fibre production installation, containing 90% continuous fibre and 10% intermediate product, characterized by a content of organic substances, expressed as elementary carbon, of 1.2%, a moisture content of 5%, and the presence of magnetic metals and opaque non-melting materials, was initially subjected to draining and washing with water which removed about 60% of the water initially present (3 kg) and an unquantifiable proportion of organic products emulsified with the water. The washed and drained material was then treated in the same conditions as those detailed in Example 1, no difficulties being encountered either in the cutting of the continuous fibre or in the placing of the material on the heat-resistant steel belt. The material consisting of shortened fibre was then supplied continuously to an electromagnet, which extracted all the magnetic metals present (about 0.2 kg). In this case, a thickness of 3 - 5 cm of material on the belt was used, and exactly the same thermal cycle as that of the preceding example was followed, in order to check the result when starting with a recovered material having the same content of organic substances but a smaller thickness of material. At the end of the process, 90.5 kg of recovered glass was obtained, with a residual content of organic substances, expressed as elementary carbon, of 0.02%. The glass with a particle size of less than 45 microns, a completely dry white powder, was passed through the magnetic field generated by a high-field electromagnet, and no magnetic metal fragments were found; after melting in a crucible at 1350°C for three hours, no traces of unmelted material were found.

### Example 3

The same material as that used in Example 2, in other words 100 kg of waste material from the primary continuous fibre production installation, containing 90% continuous fibre and 10% intermediate product, characterized by a content of organic substances, expressed as elementary carbon, of 1.2%, a moisture content of 5%, and the presence of magnetic metals and opaque non-melting materials, was treated in exactly the same conditions as those of Example 2, yielding the same results, namely: draining and washing with water which removed about 60% of the water initially present (3 kg) and an unquantifiable proportion of organic products emulsified with the water. The washed and drained material was then treated in the same conditions as those detailed in Example 1, no difficulties being encountered either in the cutting of the continuous fibre or in the placing of the material on the heat-resistant steel belt, and the wet extraction of the magnetic metals was then carried out by means of an electromagnet (about 0.2 kg). In this case, the thickness of the material on the belt was returned to 5 - 7 cm as in Example 1. The acceleration of the combustion was improved by modifying the curve of temperature variation in the course of the thermal cycle in order to make use of the surprising effect of the delay in the surface softening of the glass fibre caused by the low level of heat transfer towards the glass.

The conveyor belt therefore travelled with the material throughout the length of the furnace (1380 cm) at a speed of 35 cm/minute for a total period of about 40 minutes in which the temperature rose continuously from 20°C to 850 - 900°C without any stoppage in the passage through the furnace. The whole length of the furnace, upstream of the area used for cooling the semi-melted material, was used for the single heat treatment step, in which, in the interval from 20°C - 140°C, the material was dried and the volatile part of the remaining organic substances was eliminated, and, in the interval from 140°C - 850°C, the combustion of some of the polymers and the quantitative incineration of the more heat-resistant polymers took place. In this step, the incineration of the more heat-resistant organic substances was completed, whereas the material was converted to a semi-melted product only in the final part, when the glass reached a sufficient temperature. Once again it was surprisingly confirmed that, in the process according to the invention, the low coefficient of heat transfer allowed the glass to retain its fibrous appearance even when the ambient temperature had risen substantially above the softening point of the fibre, thus promoting the discharge of the incineration products. In the final step of the thermal cycle, the material was cooled with blown air and superficially frozen, taking on ideal characteristics for the subsequent grinding. The product leaving the furnace was easily removed from the conveyor belt of heat-resistant steel, which returned to the initial position and was reloaded with shortened fibre by means of the spreading machine described above. The output product, in pieces of different sizes, was stored in a hopper, from which it was collected and supplied to a high-pressure mill which reduced its dimensions to less than 45 microns. At the end of the process, 90.95 kg of recovered glass was obtained, with a content of residual organic substances of 0.015%. The glass with a particle size of less than 45 microns, a completely dry white powder, was treated with a high-field electromagnet, and no magnetic metal fragments were found; after melting in a crucible at 1350° for three hours, no traces of unmelted material were found.

### Example 4

The same material as that used in the preceding examples, in other words 100 kg of waste material from the primary continuous fibre production installation, containing 90% continuous fibre and 10% intermediate product, characterized by a content of organic substances, expressed as elementary carbon, of 1.2%, a moisture content of 5%, and the presence of magnetic metals and opaque non-melting materials, was treated in exactly the same conditions as those of Example 3, yielding the same results, as follows: draining and washing with water which removed about 60% of the water initially present (3 kg) and an unquantifiable proportion of organic products emulsified with the water. The wet separation of the magnetic metals, using an electromagnet, carried out on the shortened fibre yielded a waste product of magnetic metals weighing about 0.5 kg. The residual mixture was treated in the same conditions as those detailed in Example 1, no difficulties being encountered either in the cutting of the continuous fibre or in the placing of the material on the heat-resistant steel belt. In this case also, the thickness of the material on the belt was 5 - 7 cm as in Example 1, and the same heat treatment cycle as that tested in Example 3 was followed, making it possible to use, as explained previously, the surprising effect of the delay in surface softening of the fibre due to the low value of the coefficient of heat transfer towards the glass. In this example, the drying of the material was carried out upstream of the furnace used for the thermal cycle itself, making use of the heat contained in the fumes emitted by the steps of combustion and incineration of the organic substances which, together with those generated by the combustion of natural gas, were used to preheat the air with which the material was raised to a temperature of 140°C. It should be noted that the conveyor belt of heat-resistant steel was extended to incorporate the new portion of the heating path, thus increasing the time available to carry out the successive steps of the heat treatment. In this case, the whole length of the furnace was used for the portion of the curve between 140°C and 850°C. In this case also, the product leaving the furnace was easily removed from the conveyor belt of heat-resistant steel. The output product, in pieces of different sizes, was stored in a hopper, from which it was collected and supplied to a high-pressure mill which reduced its dimensions to less than 45 microns. At the end of the process, 89.6 kg of recovered glass was obtained, with a content of residual organic substances of 0.015%. The glass with a particle size of less than 45 microns, a completely dry white powder, was treated with a high-field electromagnet, and no magnetic metal fragments were found; after melting in a crucible at 1350° for three hours, no traces of unmelted material were found.

### Example 5

The same material as that used in all the other examples, in other words 100 kg of waste material from the primary continuous fibre production installation, containing 90% continuous fibre and 10% intermediate product, characterized by a content of organic substances, expressed as elementary carbon, of 1.2%, a moisture content of 5%, and the presence of magnetic metals and opaque non-melting materials, was treated in exactly the same conditions as those of Examples 3 and 4, yielding the same results, as follows: draining and washing with water removed about 60% of the water initially present (3 kg) and an unquantifiable proportion of organic products emulsified with the water. The wet separation of the magnetic metals, using an electromagnet, carried out on the shortened fibre yielded a waste product of magnetic metals weighing about 0.5 kg. The residual mixture was treated in the same conditions as those detailed in Example 1, no difficulties being encountered either in the cutting of the continuous fibre or in the placing of the material on the heat-resistant steel belt. In this case also, the thickness of the material on the belt was adjusted to 5 - 7 cm as in Example 1, and the same heat treatment cycle as that tested in Examples 3 and 4 was followed, making it possible to use, as explained previously, the surprising effect of the delay in surface softening of the fibre due to the low value of the coefficient of heat transfer towards the glass. In this example also, the drying of the material was carried out upstream of the furnace used for the thermal cycle itself, use being made, for preheating the material to 140°C, of the potential heat contained in the fumes produced by the post-combustion of the effluent gases from the steps of combustion and incineration of the organic substances, with the aid of the correct proportion of natural gas, which was obviously also required. It should be repeated that, in this case also, the conveyor belt of heat-resistant steel was extended to cover the new portion of the heating path, thus increasing the time available to carry out the successive steps of the heat treatment, since, in this case also, the whole length of the furnace was used for the portion of the curve between 140°C and 850°C. The only difference from Example 4 lies in the fact that air enriched with oxygen (+ 20% by volume) was introduced into the area of the furnace where the temperature reached 380 - 400°C, to assist in the progress of the combustion of the organic substances. In this case also, the product leaving the furnace was easily removed from the conveyor belt of heat-resistant steel. The output product, in pieces of widely differing sizes, was stored in a hopper, from which it was collected and supplied to a high-pressure mill which reduced its dimensions to less than 45 microns. At the end of the process, 90.5 kg of recovered glass was obtained, with a content of residual organic substances of less than 0.015%. The glass with a particle size of less than 45 microns, a completely dry white powder, was treated with a high-field electromagnet, and no magnetic metal fragments were found; after melting in a crucible at 1350° for three hours, no traces of unmelted material were found.

The following table summarizes the results. It should be noted that, in Example 5, air enriched with O₂ (20% by volume) was blown in at above 400 °C.

| Example no. | Mixture | | | Pre-treatment | | | |
|---|---|---|---|---|---|---|---|
| | | | | | | Fibre supplied | |
| | Long fibre | Intermediate product | Organic substanc es % | H2O drained off, kg | Magnetic metals, kg | Thickness cm | Uniformity |
| 1 | 90% | 10% | 1.2 | 1.5 | 0.6 | 5-7 | Reasonable |
| 2 | 90% | 10% | | 3.0 | 0.2 | 3-5 | Good |
| 3 | 90% | 10% | | 3.0 | 0.2 | 5-7 | Reasonable |
| 4 | 90% | 10% | | 3.0 | 0.5 | 5-7 | Reasonable |
| 5 | 90% | 10% | 2.4 | 3.0 | 0.5 | 10 | Reasonable |

| Example no. | Heat treatment | | | | |
|---|---|---|---|---|---|
| | Drying outside furnace | First step 20 - 500°C | | Second step 500 - 900°C | |
| | | Furnace % | Speed | Furnace % | Speed |
| 1 | no | 70 | slow | 30 | fast |
| 2 | no | 70 | slow | 30 | fast |
| 3 | no | 100% 20 - 900°C | | | |
| 4 | yes | 100% 140 - 900°C | | | |
| 5 | yes | 100% 140 - 900°C with 02 | | | |

| Example no. | Recovery of combustion and incineration fumes | Results | | | |
|---|---|---|---|---|---|
| | | Fibre recycled, kg | Waste, kg | Losses, kg | Organic substances, % |
| 1 | No | 93.60 | 4.40 | 2.00 | 0.025 |
| 2 | No | 90.50 | 7.00 | 2.50 | 0.020 |
| 3 | No | 90.95 | 7.05 | 2.00 | 0.015 |
| 4 | Yes | 89.60 | 7.40 | 3.00 | 0.015 |
| 5 | Yes | 90.50 | 7.50 | 2.00 | < 0.015 |

## Claims

1. Method for treating continuous fibreglass filament waste, comprising the steps of
comminuting said waste to obtain comminuted fibre pieces (h) of predetermined size;
continuously feeding a feedstock of comminuted fibre pieces to a heat treatment; and
within said heat treatment, heating said feedstock of comminuted fibre pieces to cause, in succession, the elimination of any moisture content, the evaporation of volatile components of an organic coating of the continuous fibre, and the combustion of residual components of the organic coating;
**characterized in that**
said feedstock of comminuted fibre pieces is fed to the heat treatment as a web of material, whose thickness at the entry to the heat treatment is controlled so as to have a predetermined maximum value;
at least the combustion of residual components of the organic coating takes place in a tunnel furnace (20, 21) comprising a plurality of heat sources provided at least above and below said web of material; and
during the heat treatment, the feedstock of comminuted fibre pieces moves continuously forward, and is brought, in conditions of progressively rising temperature, from a starting temperature to a final heating temperature greater than the softening point of fibreglass.

2. Method according to Claim 1, in which the fibre is E-glass fibre, and the organic content of the waste is in the range from 0.5% to 8% by weight, or preferably from 1% to 4% by weight.

3. Method according to Claim 1 or 2, in which, before comminution, said waste is subjected to washing and subsequent draining of the washing liquid.

4. Method according to any of Claims 1 to 3, in which, before comminution, said waste is subjected to magnetic separation to remove any metal contaminants.

5. Method according to any of the preceding claims, in which, within said heat treatment, after the combustion of the residual components of the organic coating, said feedstock of comminuted fibre pieces is further heated to cause it to be sintered.

## Patentansprüche

1. Verfahren zur Behandlung von kontinuierlichem Glasfaserfilamentabfall, umfassend die Schritte des
Zerkleinerns des Abfalls zum Erhalten von zerkleinerten Faserstücken (h) mit einer vorgegebenen Größe,
kontinuierlichen Zuführens eines Aufgabeguts von zerkleinerten Faserstücken zu einer Wärmebehandlung und
Erwärmens des Aufgabeguts von zerkleinerten Faserstücken in der Wärmebehandlung, so dass nacheinander die Beseitigung von jedwedem Feuchtigkeitsgehalt, das Verdampfen von flüchtigen Komponenten einer organischen Beschichtung der kontinuierlichen Faser und das Verbrennen von Restkomponenten der organischen Beschichtung bewirkt werden,
**dadurch gekennzeichnet, dass**
das Aufgabegut von zerkleinerten Faserstücken der Wärmebehandlung als eine Materialbahn zugeführt wird, deren Dicke am Eintritt zu der Wärmebehandlung so eingestellt ist, dass sie einen vorgegebenen Maximalwert aufweist,
mindestens die Verbrennung von Restkomponenten der organischen Beschichtung in einem Tunnelofen (20, 21) stattfindet, der eine Mehrzahl von Wärmequellen umfasst, die mindestens oberhalb und unterhalb der Materialbahn bereitgestellt sind, und
sich das Aufgabegut von zerkleinerten Faserstücken während der Wärmebehandlung kontinuierlich vorwärts bewegt und unter Bedingungen einer zunehmend ansteigenden Temperatur von einer Ausgangstemperatur auf eine Enderwärmungstemperatur, die höher ist als der Erweichungspunkt von Glasfasern, gebracht wird.

2. Verfahren nach Anspruch 1, bei dem die Faser eine E-Glasfaser ist und der organische Gehalt des Abfalls im Bereich von 0,5 Gew.-% bis 8 Gew.-% oder vorzugsweise von 1 Gew.-% bis 4 Gew.-% liegt.

3. Verfahren nach Anspruch 1 oder 2, bei dem der Abfall vor dem Zerkleinern einem Waschen und einem anschließenden Entfernen der Waschflüssigkeit unterzogen wird.

4. Verfahren nach einem der Ansprüche 1 bis 3, bei dem der Abfall vor dem Zerkleinern einer magnetischen Trennung zum Entfernen von jedweden Metallverunreinigungen unterzogen wird.

5. Verfahren nach einem der vorhergehenden Ansprüche, bei dem in der Wärmebehandlung nach dem Verbrennen der Restkomponenten der organischen Beschichtung das Aufgabegut von zerkleinerten Faserstücken weiter erwärmt wird, so dass dessen Sintern bewirkt wird.

## Revendications

1. Procédé pour traiter des déchets de filaments de fibres de verre continues, comprenant les étapes
de concassage desdits déchets afin d'obtenir des morceaux de fibres concassées (h) de taille prédéterminée ;
d'alimentation d'un traitement thermique en continu avec des morceaux de fibres concassées ; et
au cours dudit traitement thermique, chauffage desdits morceaux de fibres concassées afin de provoquer, successivement, l'élimination de leur éventuelle humidité, l'évaporation des composants volatils d'un revêtement organique des fibres continues et la combustion des composants restants du revêtement organique ;
**caractérisé en ce que**
lesdits morceaux de fibres concassées sont amenées au traitement thermique sous la forme d'une nappe de matière dont l'épaisseur à l'entrée du traitement thermique est contrôlée de façon à avoir une valeur maximale prédéterminée ;
la combustion des composants restants du revêtement organique, au minimum, a lieu dans un four tunnel (20, 21) comprenant plusieurs sources de chaleur prévues au moins au-dessus et en dessous de ladite nappe de matière ; et
au cours du traitement thermique, l'arrivée de morceaux de fibres concassées avance en continu, dans des conditions d'augmentation progressive de la température, d'une température de départ à une température de chauffage finale plus élevée que le point de ramollissement des fibres de verre.

2. Procédé selon la revendication 1, dans lequel les fibres sont des fibres de verre E et la teneur en matière organique des déchets est comprise entre 0,5 % et 8 % en poids, ou de préférence entre 1 % et 4 % en poids.

3. Procédé selon la revendication 1 ou 2 dans lequel, avant le concassage, lesdits déchets sont lavés et le liquide de lavage est ensuite drainé.

4. Procédé selon l'une des revendications 1 à 3 dans lequel, avant le concassage, lesdits déchets subissent une séparation magnétique destinée à éliminer les contaminants métalliques.

5. Procédé selon l'une des revendications précédentes dans lequel, au cours dudit traitement thermique, après la combustion des composants organiques restants du revêtement organique, lesdits morceaux de fibres concassées sont chauffés encore afin de les fritter.
